(19) Europäisches Patentamt
European Patent Office
Office européen des brevets

(11) **EP 3 590 706 A1**

(12) **EUROPEAN PATENT APPLICATION**
published in accordance with Art. 153(4) EPC

(43) Date of publication:
**08.01.2020 Bulletin 2020/02**

(51) Int Cl.:
**B32B 9/00** (2006.01)     **B32B 27/36** (2006.01)
**B32B 27/40** (2006.01)     **B65D 65/40** (2006.01)

(21) Application number: **18760311.3**

(22) Date of filing: **23.01.2018**

(86) International application number:
**PCT/JP2018/001899**

(87) International publication number:
**WO 2018/159157 (07.09.2018 Gazette 2018/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority:  **28.02.2017   JP 2017037202**

(71) Applicant: **Toyobo Co., Ltd.
Osaka-shi
Osaka 530-8230 (JP)**

(72) Inventors:
• **GOTO Takamichi
Inuyama-shi
Aichi 484-8508 (JP)**
• **YAMAZAKI Atsushi
Inuyama-shi
Aichi 484-8508 (JP)**

(74) Representative: **Vossius & Partner
Patentanwälte Rechtsanwälte mbB
Siebertstrasse 3
81675 München (DE)**

(54) **LAMINATED FILM**

(57)     [Problem] To provide a laminated film having an inorganic thin film layer and a protective layer in this order on a base film layer, the laminated film being excellent in bag rupture resistance and bending resistance and having excellent gas barrier properties before and after bag producing processing or even when a bag produced from the laminated film is further used for packaging of hard contents such as packaging of dry matter or used for applications involving subjection to a harsh wet-heat treatment such as retort sterilization.

[Solution] The laminated film comprise an inorganic thin film layer and a protective layer in this order on a base film layer, wherein the base film layer satisfies the following conditions (a) to (c):

(a) the base film layer comprises a resin composition containing 60% by mass or more of a polybutylene terephthalate resin;

(b) a thermal shrinkage at 150°C is 4.0% or less both in a longitudinal direction and a width direction of the base film layer; and

(c) a dimensional change rate at 200°C with respect to an original length of the film is 2% or less in a temperature-dimensional change curve in a longitudinal direction of the base film layer.

EP 3 590 706 A1

**Description**

TECHNICAL FIELD

The present invention relates to a laminated film used in the field of packaging of foodstuffs, pharmaceuticals, industrial products, and the like. More specifically, the present invention relates to a laminated film having an inorganic thin film layer and a protective layer in this order on a base film layer, the laminated film being excellent in bag rupture resistance and having excellent gas barrier properties before and after bag producing processing or even when a bag produced from the laminated film is further used for packaging of hard contents such as packaging of dry matter, or used for applications involving subjection to a harsh wet-heat treatment such as retort sterilization.

BACKGROUND ART

Packaging materials used for foodstuffs, pharmaceutical products, and the like are required to have characteristics of blocking gases such as oxygen and water vapor, namely, gas barrier properties, in order to suppress oxidation of proteins, oils and fats, keep taste and freshness, and maintain efficacy of pharmaceutical products. In addition, gas barrier materials used for electronic devices, electronic parts, or the like including solar cells and organic EL devices are required to have higher gas barrier properties than gas barrier properties of packaging materials for foodstuffs and the like.

Hitherto, in the food applications requiring blocking of various gases such as water vapor and oxygen, a gas barrier laminated film in which a metal thin film made of aluminum or the like, and an inorganic thin film made of an inorganic oxide such as silicon oxide and aluminum oxide are formed on a surface of a base film layer made of plastic has been generally used.

It has been known that use of a biaxially stretched nylon film (ONY) as the base film layer improves resistance to a pinhole caused by contents and eliminates leakage of contents when a bag falls (for example, Patent Document 5). However, there are problems that the biaxially stretched nylon film (ONY) has a great dimensional change at the time of moisture absorption, resulting in occurrence of curling due to the moisture absorption during processing, and that the biaxially stretched nylon film (ONY) deforms due to shrinkage when subjected to harsh treatments such as retort sterilization.

A gas barrier laminated film obtained by forming a thin film (inorganic thin film layer) of an inorganic oxide such as silicon oxide, aluminum oxide, or a mixture thereof on a polyethylene terephthalate (PET) film is widely used because such a film is transparent and the contents packaged therein can be seen (for example, Patent Document 1 and Patent Document 2).

A polyethylene terephthalate (PET) film is excellent in heat resistance and dimensional stability and can be used even when subjected to a harsh treatment such as retort sterilization. However, the polyethylene terephthalate (PET) film is brittle, and therefore, the problem remains that a bag made of a laminated film using the polyethylene terephthalate (PET) film is torn or punctured when it falls, so that the contents packaged in the bag may leak.

The polyethylene terephthalate (PET) film has also a problem that when used as packaging material for hard contents such as dry matter, the inorganic thin film layer is physically damaged by puncture or the like with the contents, so that the gas barrier properties may deteriorate and the contents packaged in the bag may leak.

As a method for solving these problems, a technique has been proposed in which a low-cost packaging material, for boiling or retorting, having low elution and excellent transparency can be obtained by using, as a base film layer of a transparent film having gas barrier properties, a layer having a biaxially stretched multilayer film obtained by biaxially stretching a multilayer film having a polyester-based resin layer and a polyamide-based resin layer (for example, Patent Document 3).

This conventional art has a problem that separation is likely to occur at the interface between the polyester-based resin layer and the polyamide-based resin layer, and when a bag falls, the bag is likely to be broken, resulting in leaking of contents.

A biaxially stretched polybutylene terephthalate film composed of at least either a polybutylene terephthalate (hereinafter often abbreviated as "PBT") resin or a polyester resin composition in which a polyethylene terephthalate (hereinafter often abbreviated as "PET") resin is blended in a range of 30% by weight or less with respect to a polybutylene terephthalate resin has been known to be used as the base film layer (for example, Patent Document 4).

Although this conventional art improves impact resistance of the film, the gas barrier properties after making it into a laminated film are not sufficient. In addition, this conventional art has a problem that the gas barrier properties and laminate strength after retort treatment are insufficient.

PRIOR ART DOCUMENTS

PATENT DOCUMENTS

Patent Document 1: JP-A-H06-278240
Patent Document 2: JP-A-H11-10725
Patent Document 3: JP-A-2013-154605
Patent Document 4: JP-A-2012-214248

SUMMARY OF THE INVENTION

PROBLEMS TO BE SOLVED BY THE INVENTION

The present invention has been made with the above-mentioned technical problems as a backdrop.

That is, an object of the present invention is to provide a laminated film having an inorganic thin film layer and a protective layer in this order on a base film layer, the laminated film being excellent in bag rupture resistance and bending resistance and having excellent gas barrier properties before and after bag producing processing or even when a bag produced from the laminated film is further used for packaging of hard contents such as packaging of dry matter or used for applications involving subjection to a harsh wet-heat treatment such as retort sterilization.

SOLUTIONS TO THE PROBLEMS

To achieve a laminated film that is excellent in bag rupture resistance and bending resistance and having excellent gas barrier properties before and after bag producing processing or even when a bag produced from the laminated film is further used for packaging of hard contents such as packaging of dry matter or used for applications involving subjection to a harsh wet-heat treatment such as retort sterilization, it is considered that it is preferable to provide an inorganic thin film layer and a protective film on a PBT film.

In a method of industrially forming an inorganic thin film layer and a protective film on a film base layer, it is preferable to provide, while feeding a film roll as a film base, a step of forming an inorganic thin film layer and subsequently a step of forming a protective film. In the step of forming a protective film, in particular, in order to dry and cure a coating solution containing a composition used in the protective film, an applied coating is heat-treated at a high temperature of about several tens °C to 200°C, and the film is thereafter rolled up while applying a certain tension mainly in a film flow direction.

However, since PBT has a lower glass transition temperature than a glass transition temperature of PET, the PBT film is easily stretched when tension is applied thereto under a high temperature.

The inventors of the present invention have found that when tension is applied to the film with heating in the step of forming a protective film, the film base is stretched, cracks are produced in the inorganic thin film layer previously formed, and as a result, the gas barrier properties of the obtained laminated film may deteriorate.

As a result of intensive studies, the inventors have found that in a gas barrier film obtained by laminating an inorganic thin film layer on a film base mainly composed of PBT, when the thermal shrinkage, and the dimensional change rate under a predetermined load and temperature of the PBT film used as the film base layer are within specific ranges, the PBT film is less likely to suffer from deformation even under the tension and heating temperature applied in the step of forming a protective film, whereby damage to the inorganic thin film layer can be suppressed, and thus the above-mentioned problems can be solved.

That is, the present invention is configured as follows.

(1) A laminated film comprising an inorganic thin film layer and a protective layer in this order on a base film layer, wherein the base film layer satisfies the following conditions (a) to (c):

(a) the base film layer comprises a resin composition containing 60% by mass or more of a PBT resin;
(b) a thermal shrinkage at 150°C is 4.0% or less both in the longitudinal direction and the width direction of the base film layer; and
(c) a dimensional change rate at 200°C with respect to the original length of the film is 2% or less in a temperature-dimensional change curve in the longitudinal direction of the base film layer.

(2) The laminated film according to above (1), wherein the protective layer comprises a resin composition containing a urethane resin.

(3) The laminated film according to above (2), wherein the urethane resin contains an aromatic or araliphatic component.

(4) The laminated film according to any of above (1) to (3), wherein the inorganic thin film layer comprises a composite oxide of silicon oxide and aluminum oxide.

(5) The laminated film according to any of above (1) to (4), further comprising a coating layer between the base film layer and the inorganic thin film layer.

(6) The laminated film according to above (1) to (5), wherein the coating layer comprises a resin composition containing a resin having an oxazoline group.

(7) A packaging material obtained by laminating a sealant layer on one surface of the laminated film according to any of above (1) to (6).

EFFECTS OF THE INVENTION

With the above-mentioned technique by the present inventors, it becomes possible to provide a laminated film that is excellent in bag rupture resistance and bending resistance, and has excellent gas barrier properties before and after bag producing processing or even when a bag produced from the laminated film is further used for packaging of hard contents such as packaging of dry matter or used for applications involving subjection to a harsh wet-heat treatment such as retort sterilization.

MODE FOR CARRYING OUT THE INVENTION

Hereinafter, the present invention will be described in detail.

[Base film layer]

The base film layer used in the present invention is composed of a resin composition containing PBT as a main component, wherein the content of the PBT is preferably 60% by mass or more, and more preferably 70% by mass or more. If the content of the PBT is less than 60% by mass, impact strength or pinhole resistance decreases, and film characteristics become insufficient.

In the PBT used as the main component, terephthalic acid is contained as a dicarboxylic acid component in an amount of preferably 90 mol% or more, more preferably 95 mol% or more, further preferably 98 mol% or more, and most preferably 100 mol%. 1,4-butanediol is contained as a glycol component in an amount of preferably 90 mol% or more, more preferably 95 mol% or more, further preferably 97 mol% or more, and it is most preferable that nothing other than byproducts produced by ether bond of 1,4-butanediol during polymerization be contained.

The polyester resin composition used in the present invention can contain a polyester resin other than PBT for the purpose of adjusting the film-formability during biaxial stretching and the mechanical properties of a film produced.

Examples of the polyester resin (B) other than PBT include: at least one polyester resin selected from the group consisting of PET, polyethylene naphthalate, polybutylene naphthalate and polypropylene terephthalate; PBT resins produced by copolymerization with at least one dicarboxylic acid selected from the group consisting of isophthalic acid, ortho-phthalic acid, a naphthalenedicarboxylic acid, biphenyldicarboxylic acid, a cyclohexanedicarboxylic acid, adipic acid, azelaic acid and sebacic acid; and PBT resins produced by copolymerization with at least one diol component selected from the group consisting of ethylene glycol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol and polycarbonatediol.

The upper limit of the added amount of the polyester resin other than a PBT resin is preferably less than 40% by mass, and more preferably 30% by mass or less. If the added amount of the polyester resin other than a PBT resin is more than 40% by mass, mechanical properties imparted by polybutylene terephthalate may deteriorate, and therefore the impact strength, pinhole resistance and bag rupture resistance of the film may become insufficient, and the transparency and gas barrier properties of the film may also deteriorate.

The lower limit of the intrinsic viscosity of the polybutylene terephthalate (PBT) resin used in the present invention is preferably 0.9 dl/g, more preferably 0.95 dl/g, and further preferably 1.0 dl/g.

If the intrinsic viscosity of the polybutylene terephthalate (PBT) resin as a raw material is less than 0.9 dl/g, the intrinsic viscosity of the film obtained by film formation may decrease, and the puncture strength, impact strength, pinhole resistance, bag rupture resistance or the like may be reduced.

The upper limit of the intrinsic viscosity of the polybutylene terephthalate resin is preferably 1.3 dl/g. If the intrinsic viscosity is more than the above value, stress generated during stretching becomes too high, sometimes resulting in deterioration in film-formability. When using a polybutylene terephthalate having a high intrinsic viscosity, it is necessary to set the extrusion temperature to a high temperature because the melt viscosity of the resin becomes high. When the polybutylene terephthalate resin is extruded at a higher temperature, decomposition products are likely to be produced.

The polybutylene terephthalate (PBT) resin may optionally contain a conventionally known additive, such as a lubricant, a stabilizer, a coloring agent, an antistatic agent and an ultraviolet ray absorber.

As the lubricant species, inorganic lubricants such as silica, calcium carbonate and alumina, and organic lubricants are preferred, and silica and calcium carbonate are more preferred. Among these lubricants, silica is particularly preferred because silica can reduce the haze of the film. By using these lubricants, transparency and lubricity can be exerted.

The lower limit of the concentration of the lubricant is preferably 100 ppm, more preferably 500 ppm, and further preferably 800 ppm. If the concentration is less than 100 ppm, the base film layer may have deteriorated lubricity. The upper limit of the concentration of the lubricant is preferably 20000 ppm, more preferably 10000 ppm, and further preferably 1800 ppm. If the concentration is more than 20000 ppm, the transparency is sometimes deteriorated.

In the base film layer in the present invention, the resin having the same composition is preferably present over the entire area of the film.

The lower limit of the thickness of the base film layer in the present invention is preferably 3 $\mu$m, more preferably 5 $\mu$m, and further preferably 8 $\mu$m. If the thickness of the base film layer is 3 $\mu$m or more, a sufficient strength as the base film layer can be achieved.

The upper limit of the thickness of the base film layer is preferably 100 $\mu$m, more preferably 75 $\mu$m, and further preferably 50 $\mu$m. If the thickness of the base film layer is 100 $\mu$m or less, processing for the object of the present invention may become easier.

The upper limit of the thermal shrinkage, after heating at 150°C for 15 minutes, both in the machine direction (MD) and the transverse direction (TD) of stretching of the base film layer in the present invention is preferably 4.0%, more preferably 3.0%, and further preferably 2%. If the thermal shrinkage is more than the above value, the inorganic thin film layer may be cracked due to dimensional change of the base film layer which occurs in a step for forming a protective film or in high-temperature treatment such as retort sterilization treatment, and as a result, the gas barrier properties may deteriorate. In addition, pitch deviation and the like may occur due to dimensional change during processing such as printing.

The lower limit of the thermal shrinkage, after heating at 150°C for 15 minutes, both in the machine direction (MD) and the transverse direction (TD) of the base film layer in the present invention is preferably -2.0%. If the thermal shrinkage is less than the above value, the improvement effect cannot be obtained any more (saturated), and the layer may become mechanically brittle.

In a temperature-dimensional change curve in the longitudinal direction of the base film layer in the present invention, a dimensional change rate at 200°C with respect to the original length of the film is preferably 2% or less. If the dimensional change rate is more than 2%, the inorganic thin film layer may be cracked due to dimensional change of the base film layer which occurs in a step for forming a protective film or in high temperature treatment such as retort sterilization treatment, and as a result, the gas barrier properties may deteriorate. In addition, pitch deviation and the like may occur due to dimensional change during processing such as printing.

The dimensional change rate is more preferably 1.5% or less, further preferably 1.0% or less, still further preferably 0.5% or less, and particularly preferably 0% or less.

The lower limit of the impact strength of the base film layer in the present invention is preferably 0.05 J/$\mu$m. If the impact strength is 0.05 J/$\mu$m or more, the strength may become sufficient at the time of use as a bag.

The upper limit of the impact strength of the base film layer in the present invention is preferably 0.2 J/$\mu$m. Even if the impact strength is 0.2 J/$\mu$m or less, the improvement effect can be sometimes maximized.

The lower limit of the degree of longitudinal orientation ($\Delta$Nx) of the base film layer in the present invention is preferably 0.04, more preferably 0.045, and further preferably 0.05. If the degree of longitudinal orientation is less than the above value, sufficient strength as a base film layer cannot be obtained and the bag rupture resistance may be lowered because of the weak orientation. In addition, when an inorganic thin film layer and a protective layer are provided on the base film layer to form a laminated film, the laminated film is easily stretched due to the tension and the temperature applied on forming the protective layer, and the inorganic thin film layer may be broken, and as a result, the gas barrier properties may deteriorate.

The upper limit of the degree of longitudinal orientation ($\Delta$Nx) of the base film layer in the present invention is preferably 0.09, more preferably 0.085, and further preferably 0.08. If the degree of longitudinal orientation is within the above range, the mechanical properties and linear tear properties of the base film layer become more suitable.

The upper limit of the haze per thickness of the base film layer in the present invention is preferably 0.66%/$\mu$m, more preferably 0.60%/$\mu$m, and further preferably 0.53%/$\mu$m. When the base film layer having a haze of 0.66%/$\mu$m or less is subjected to printing, the quality of printed characters and images is improved.

The base film layer in the present invention may be subjected to corona discharge treatment, glow discharge treatment, flame treatment, or surface roughening treatment, as long as the object of the present invention is not impaired, and may be subjected to well-known anchor coating processing, printing, decoration, or the like.

Next, a production method for obtaining the base film layer according to the present invention will be specifically described, but the production method is not limited thereto.

First, film raw materials are dried or dried by hot air. Next, the raw materials are weighed, mixed, fed to an extruder, molten by heating, and melt-casted into a sheet shape.

Then, the resin sheet in a molten state is brought into close contact with a cooling roll (casting roll) using an electrostatic charging method to be cooled and solidified, whereby an unstretched sheet is obtained. The electrostatic charging method is a method in which in the vicinity where a resin sheet in a molten state contacts a rotating metal roll, the resin sheet is electrically charged by applying a voltage to an electrode placed near a surface opposite to the surface of the resin sheet in contact with the rotating metal roll to bring the resin sheet into close contact with the rotating cooling roll.

The lower limit of the temperature for melting the resin by heating is preferably 200°C, more preferably 250°C, and further preferably 260°C. If the temperature is lower than the above value, discharge may become unstable. The upper limit of the resin melting temperature is preferably 280°C, and more preferably 270°C. If the temperature exceeds the above value, decomposition of the resin proceeds, and thus the film may become brittle.

When extruding and casting the molten polyester resin onto the cooling roll, it is preferred to reduce a difference in degree of crystallinity in the width direction. A specific method therefor is to extrude and cast the molten polyester resin such that the raw materials having the same composition are laminated to form a multi-layer at the time of casting, and further to set the temperature of the cooling roll to be low.

Since a PBT resin has a high crystallization rate, the crystallization of a PBT resin proceeds even during casting.

At this time, in the case of casting in monolayering without multi-layering, there is no barrier that can suppress crystal growth, and thus the crystals are grown to spherical crystals having larger sizes. As a result, the obtained unstretched sheet has high yield stress and may be broken easily during biaxial stretching. In addition, a biaxially stretched film thus produced will have insufficient impact strength, pinhole resistance and bag rupture resistance. On the other hand, when multiple layers of the same resin are laminated to form an unstretched sheet, the stretching stress of the unstretched sheet can be reduced and a subsequent biaxial stretching can be achieved stably.

A method for extruding and casting the molten polyester resin such that the raw materials having the same composition are laminated to form a multi-layer at the time of casting includes specifically at least the following steps of: Step (1) of melting a resin composition containing 60% by weight or more of a PBT resin to form a molten fluid; Step (2) of forming a laminated fluid having the number of lamination of 60 or more from the formed molten fluid; Step (3) of discharging the formed laminated fluid from a die and casting the fluid on a cooling roll to be solidified, so that a laminated unstretched sheet is formed; and Step (4) of biaxially stretching the laminated unstretched sheet.

There may be no problem even if other steps are inserted between Step (1) and Step (2) as well as between Step (2) and Step (3). For example, a filtration step, a temperature change step and the like may be inserted between Step (1) and Step (2). Besides, a temperature change step, a charge addition step and the like may be inserted between Step (2) and Step (3). However, there should not be a step of breaking the laminated structure formed in Step (2) between Step (2) and Step (3).

In Step (1), the method of melting a polyester resin composition to form a molten fluid is not particularly limited, and a preferred method includes a method of melting a polyester resin composition under heat using a single screw extruder or twin screw extruder.

The method of forming a laminated fluid in Step (2) is not particularly limited, but from the viewpoints of facility simplicity and maintainability, a static mixer and/or a multi-layer feed block is more preferably used. Also, from the viewpoint of uniformity in the sheet width direction, one having a rectangular melt line is more preferably used. It is further preferred to use a static mixer or a multi-layer feed block having a rectangular melt line. A resin composition composed of a plurality of layers formed by combining a plurality of resin compositions may be passed through one or more of a static mixer, a multi-layer feed block and a multi-layer manifold.

The theoretical number of lamination in Step (2) is preferably 60 or more. The lower limit of the theoretical number of lamination is more preferably 500. If the theoretical number of lamination is too small, the distance between the layer interfaces becomes long and the crystal size tends to be too large, so that the effect of the present invention tends not to be obtained. In addition, the degree of crystallinity in the vicinity of both ends of the sheet increases, and the film formation becomes unstable. Furthermore, the transparency after molding may decrease. The upper limit of the theoretical number of lamination in Step (2) is not particularly limited, and is preferably 100000, more preferably 10000, and further preferably 7000. Even when the theoretical number of lamination is extremely increased, the effect thereof may be saturated.

When the lamination in Step (2) is performed by a static mixer, the theoretical number of lamination can be adjusted by selecting the number of elements of the static mixer. A static mixer is generally known as a stationary mixer without a driving part (line mixer), and a fluid entering the mixer is sequentially stirred and mixed by the elements. However, when a high viscosity fluid is passed through the static mixer, splitting and lamination of the high viscosity fluid occur, and a laminated fluid is formed. The high viscosity fluid is divided into two parts every time the fluid passes through one element of the static mixer, then joined together and laminated. Therefore, when a high viscosity fluid is passed through a static mixer having the number of elements n, a laminated fluid having a theoretical number of lamination N = $2^n$ is formed.

A typical static mixer element has a structure in which a rectangular plate is twisted by 180 degrees, and there are a right element and a left element depending on the twisting direction. The dimension of each element is basically 1.5 times the length with respect to the diameter. The static mixer that can be used in the present invention is not limited to those described above.

When the lamination in Step (2) is performed by a multi-layer feed block, the theoretical number of lamination can be adjusted by selecting the number of times of division and lamination of the multi-layer feed block. It is possible to install a plurality of multi-layer feed blocks in series. It is also possible to use, as a laminated fluid, a high viscosity fluid itself supplied to the multi-layer feed block. For example, when the number of lamination of the high viscosity fluid supplied to the multi-layer feed block is p, the number of division and lamination of the multi-layer feed block is q, and the number of the multi-layer feed blocks installed is r, the number of lamination N of the laminated fluid is $N = p \times q^r$.

In Step (3), the laminated fluid is discharged from a die and cast on a cooling roll to be solidified.

The lower limit of the temperature of the cooling roll is preferably -10°C, and if the temperature is less than the above value, the crystallization suppression effect may be saturated. The upper limit of the temperature of the cooling roll is preferably 40°C, and if the temperature is more than the above value, the crystallization degree may become so high that the stretching may be difficult. The upper limit of the temperature of the cooling roll is preferably 25°C. Further, when the temperature of the cooling roll is controlled to be within the above range, it is preferred to lower the humidity of the environment in the vicinity of the cooling roll for preventing dew formation. It is preferred to reduce a temperature difference in the width direction of the surface of the cooling roll. In this regard, the thickness of the unstretched sheet is suitably 15 to 2500 $\mu$m.

The unstretched sheet having the above-described multi-layer structure has at least 60 layers, preferably 250 layers or more, and further preferably 1000 layers or more. If the number of layers is small, the effect of improving stretchability is lost.

Next, a stretching method will be described. A stretching method can be either a simultaneous biaxial stretching method or a sequential biaxial stretching method. In order to increasing the puncture strength, it is necessary to increase a plane orientation degree of the film. In addition, in terms of a high rate of film formation and high productivity, a sequential biaxial stretching method is most preferable.

The lower limit of the machine direction (hereinafter, referred to as "MD") stretching temperature is preferably 55°C, and more preferably 60°C. If the MD stretching temperature is 55°C or higher, the breakage of the film is not likely to occur. The degree of longitudinal orientation of the film does not also become too large, so that the shrinkage stress during heat-setting treatment can be suppressed, and thus a film having a reduced distortion of molecular orientation in the width direction can be obtained. The upper limit of the MD stretching temperature is preferably 100°C, and more preferably 95°C. When the MD stretching temperature is 100°C or lower, the orientation of the film does not become too weak, so that the mechanical properties of the film does not deteriorate.

The lower limit of the MD stretch ratio is preferably 2.8 times, and particularly preferably 3.0 times. If the MD stretch ratio is 2.8 times or more, the degree of longitudinal orientation of the film becomes large, and the dimensional change rate at 200°C becomes small. As a result, when an inorganic thin film layer and a protective layer are provided on a base film layer, the inorganic thin film layer is hard to stretch even if tension is applied to the base film layer on forming the protective layer, and thus hard to break, resulting in improving the gas barrier properties. In addition, the mechanical properties and thickness unevenness of the film also improve.

The upper limit of the MD stretch ratio is preferably 4.3 times, more preferably 4.0 times, and particularly preferably 3.8 times. If the MD stretch ratio is 4.3 times or less, the degree of orientation in the transverse direction of the film does not become too high, the shrinkage stress during Heat-setting treatment does not become too high, and thus, the distortion of molecular orientation in the transverse direction of the film reduces, resulting in improving the linear tear properties in the longitudinal direction of the film. The effect of improving mechanical strength and thickness unevenness is saturated when the MD stretch ratio is within the above range.

The lower limit of the transverse direction (hereinafter, referred to as "TD") stretching temperature is preferably 60°C. If the TD stretching temperature is 60°C or higher, the breakage of the film may not be likely to occur. The upper limit of the TD stretching temperature is preferably 100°C. If the TD stretching temperature is 100°C or lower, the degree of transverse orientation becomes large, so that the mechanical properties of the film are improved.

The lower limit of the TD stretch ratio is preferably 3.5 times, more preferably 3.6 times, and particularly preferably 3.7 times. If the TD stretch ratio is 3.5 times or more, the degree of transverse orientation does not become too small, so that the mechanical properties and the thickness unevenness of the film improve. The upper limit of the TD stretch ratio is preferably 5 times, more preferably 4.5 times, and particularly preferably 4.0 times. If the TD stretch ratio is 5.0 times or less, the effect of improving the mechanical strength and thickness unevenness of the film is also maximized (saturated) even within this range of the TD stretch ratio.

The lower limit of the TD Heat-setting temperature is preferably 200°C, and more preferably 205°C. If the TD heat-setting temperature is 200°C or higher, the thermal shrinkage of the film can be decreased, and the inorganic thin film layer is not easily damaged even after being subjected to retort treatment, so that the gas barrier properties is improved. The upper limit of the TD heat-setting temperature is preferably 240°C. If the TD heat-setting temperature is 240°C or lower, the base film layer may not be melted and thus hardly becomes brittle.

The lower limit of the TD relaxation ratio is preferably 0.5%. If the TD relaxation ratio is 0.5% or more, the breakage of the film can hardly occur during heat-setting of the film. The upper limit of the TD relaxation ratio is preferably 5%. If the TD relaxation ratio is 5% or less, shrinkage in the longitudinal direction during heat-setting of the film is reduced, and as a result, the distortion of molecular orientation at the edges of the film is reduced, so that the linear tear properties of the film are improved. In addition, the slacking of the film hardly occurs, and thickness unevenness of the film hardly occurs.

Furthermore, a layer made from another material may be laminated on the base film layer in the present invention. As a method for the lamination, the layer may be laminated on the base film layer after or during the production of the base film layer.

[Inorganic Thin Film Layer]

The gas barrier laminated film of the present invention has an inorganic thin film layer on the above-described base film layer.

The inorganic thin film layer is a thin film made from a metal or an inorganic oxide. The material to be used for forming the inorganic thin film layer is not particularly limited, as long as the material can be made into a thin film. From the viewpoint of gas barrier properties, inorganic oxides such as silicon oxide (silica), aluminum oxide (alumina), a mixture of silicon oxide and aluminum oxide, and the like can be mentioned preferably. In particular, from the viewpoint of the achievement of both flexibility and density of the thin film layer, a composite oxide composed of silicon oxide and aluminum oxide is preferred. In the composite oxide, it is preferred that silicon oxide and aluminum oxide be mixed at such a mixing ratio that the concentration of Al is 20 to 70% by mass in terms of metal content by mass. If the concentration of Al is less than 20% by mass, the barrier properties against water vapor may be decreased. If the concentration of Al is more than 70% by mass, on the other hand, the inorganic thin film layer tends to be harder and there is a possibility that the film may be broken during secondary processing such as printing or lamination to cause the deterioration in gas barrier properties. The silicon oxide as used herein is various silicon oxides such as $SiO$ and $SiO_2$, or a mixture thereof, and the aluminum oxide as used herein is various aluminum oxides such as $AlO$ and $Al_2O_3$, or a mixture thereof.

The thickness of the inorganic thin film layer is generally 1 to 100 nm, and preferably 5 to 50 nm. If the thickness of the inorganic thin film layer is less than 1 nm, acceptable gas barrier properties might not be achieved. On the other hand, if the thickness is increased to more than 100 nm, the gas barrier properties-improving effect consistent with such increase in the thickness cannot be obtained and it would become disadvantageous from the viewpoint of bending resistance and production cost.

The method for forming the inorganic thin film layer is not particularly limited, and a known vapor deposition method such as a physical vapor deposition method (PVD method), e.g., a vacuum vapor deposition method, a sputtering method and an ion plating method, or a chemical vapor deposition method (CVD method) may be employed appropriately. Hereinbelow, a typical method for forming the inorganic thin film layer is described with taking a silicon oxide-aluminum oxide-based thin film as an example. For example, in the case where a vacuum vapor deposition method is employed, a mixture of $SiO_2$ and $Al_2O_3$, a mixture of $SiO_2$ and Al or the like is used preferably as a vapor deposition raw material. As the vapor deposition raw material, particles are generally used. In this case, it is desirable that each of the particles has such a size that the change in pressure during the vapor deposition cannot be caused, and a preferred particle diameter of each of the particles is 1 to 5 mm. For performing heating, a heating mode such as resistance heating, high-frequency induction heating, electron beam heating and laser heating can be employed. As a reaction gas, oxygen gas, nitrogen gas, hydrogen gas, argon gas, carbon dioxide gas, water vapor or the like can be introduced. Alternatively, a reactive deposition method such as a deposition method by means of the addition of ozone, the ion assisted deposition method or the like may also be employed. In addition, the film formation conditions may be varied as appropriate; for example, a bias may be applied to an object to be subjected to vapor deposition (i.e., a laminated film to be subjected to vapor deposition), and an object to be subjected to vapor deposition may be heated or cooled. In the case where a sputtering method or a CVD method is employed, the vapor deposition materials, reaction gas, bias to be applied to an object to be subjected to vapor deposition, heating/cooling of an object to be subjected to vapor deposition and the like can also be varied as mentioned above.

[Coating layer]

In the laminated film of the present invention, a coating layer can be provided between the base film layer and the inorganic thin film layer for the purpose of ensuring desired gas barrier properties and laminate strength after retort treatment.

Examples of resin compositions used for the coating layer provided between the base film layer and the inorganic thin film layer include compositions obtained by adding curing agents such as epoxy curing agents, isocyanate curing agents, and melamine curing agents to resins such as urethane resins, polyester resins, acrylic resins, titanium resins, isocyanate resins, imine resins, and polybutadiene resins. These resin compositions used for the coating layer preferably contain a silane coupling agent having at least one or more organic functional groups. Examples of the organic functional groups include an alkoxy group, an amino group, an epoxy group, and an isocyanate group. By the addition of the silane coupling agent, the laminate strength after retort treatment is further improved.

Among the resin compositions used for the coating layer, a mixture of a resin containing an oxazoline group, an acrylic resin, and a urethane resin is preferably used. The oxazoline group has high affinity with the inorganic thin film, and can react with a metal hydroxide and an oxygen deficiency portion of an inorganic oxide that is generated during formation of the inorganic thin film layer, and thus firm adhesion to the inorganic thin film layer is exhibited. An unreacted oxazoline group present in a coating layer can react with a carboxylic acid terminal that is generated by hydrolysis of the base film layer and the coating layer, thereby forming crosslinks.

The method for forming the coating layer is not particularly limited, and, for example, conventionally known methods such as coating methods can be adopted. Examples of suitable methods among the coating methods include an off-line coating method and an in-line coating method. For example, in the case with an in-line coating method which is executed in a step of producing a base film layer, as conditions for drying and heat treatment at the time of coating, although depending on a coating thickness or conditions of an apparatus, it is preferable to send the base film layer to a stretching step in a perpendicular direction immediately after coating and to perform drying in a pre-heating zone or a stretching zone in the stretching step. In such a case, normally, the temperature is preferably set to about 50 to 250°C.

Examples of the solvent used in the case of using the coating methods include aromatic solvents such as benzene and toluene; alcohol solvents such as methanol and ethanol; ketone solvents such as acetone and methyl ethyl ketone; ester solvents such as ethyl acetate and butyl acetate; and polyhydric alcohol derivatives such as ethylene glycol monomethyl ether.

[Protective Layer]

In the present invention, a protective layer is provided on the inorganic thin film layer. A metal oxide layer is not a perfectly dense film, but has minute deficient portions dotted therein. By applying a specific resin composition for a protective layer described later onto the metal oxide layer to form a protective layer, the resin contained in the resin composition for a protective layer penetrates into the deficient portions of the metal oxide layer, and as a result, the gas barrier properties can be stabilized. In addition, by using a material having gas barrier properties also for the protective layer itself, the gas barrier performance of the laminated film may be greatly improved.

Examples of resin compositions used for the protective layer formed on the surface of the inorganic thin film layer of the laminated film of the present invention include compositions obtained by adding curing agents such as epoxy curing agents, isocyanate curing agents, and melamine curing agents to resins such as urethane resins, polyester resins, acrylic resins, titanium resins, isocyanate resins, imine resins, and polybutadiene resins.

It is preferred to use the urethane resin because polar groups of the urethane bonds interact with the inorganic thin film layer and further the urethane resin has flexibility by the presence of its amorphous portions, so that the inorganic thin film layer can be restrained from being damaged also when bending-load is applied to the laminated film.

The acid value of the urethane resin ranges preferably from 10 to 60 mgKOH/g, more preferably from 15 to 55 mgKOH/g, and further preferably from 20 to 50 mgKOH/g. When the acid value of the urethane resin is in any one of these ranges, the resin is improved in liquid stability when made into a water-dispersible liquid. Moreover, the resultant protective layer can be evenly deposited onto the inorganic thin film layer, which is high in polarity, so that the external appearance of the coat becomes good.

The glass transition temperature (Tg) of the urethane resin is preferably 80°C or higher, and more preferably 90°C or higher. When the Tg is 80°C or higher, a swelling of the protective layer based on molecular movement can be decreased in a heat-moisture treatment process (temperature-raising → temperature-keeping → temperature-lowering).

As the urethane resin, from the viewpoint of the gas barrier properties, it is more preferred to use a urethane resin containing, as a main constituent component, an aromatic or araliphatic diisocyanate component.

The urethane resin particularly preferably contains, among such diisocyanate components, a m-xylylene diisocyanate component. The use of the above resin allows that an effect of stacking between its aromatic rings further heightens the cohesive force of the urethane bonds. Consequently, the laminated film gains satisfactory gas barrier properties.

In the present invention, the proportion of the aromatic or araliphatic diisocyanate(s) in the urethane resin is preferably in the range of 50 mol% or more (from 50 to 100 mol%) in 100 mol% of the polyisocyanate component (F).

The total proportion of the aromatic or araliphatic diisocyanate(s) is preferably from 60 to 100 mol%, more preferably from 70 to 100 mol%, and further preferably from 80 to 100 mol%. As such resins, "TAKELAC (registered trademark) WPB" series commercially available from Mitsui Chemicals, Inc. are suitably used. If the total proportion of the aromatic or araliphatic diisocyanate(s) is less than 50 mol%, the laminated film may not gain satisfactory gas barrier properties.

The urethane resin preferably has a carboxylate group (carboxyl group) from the viewpoint of an improvement in affinity with the inorganic thin film layer. In order to incorporate a carboxylate (salt) group into the urethane resin, it is advisable to introduce thereinto the following, for example, as a polyol component: a polyol compound having a carboxylate group, such as dimethylolpropionic acid or dimethylolbutanoic acid, as a copolymerizable component. Moreover, when a carboxylate-group-containing urethane resin is synthesized and subsequently the reaction system is neutralized with a salt-forming agent, a urethane resin of a water-dispersible product can be gained. Specific examples of the salt-forming agent include ammonia, trimethylamine, triethylamine, triisopropylamine, tri-n-propylamine, tri-n-butylamine, and other trialkylamines; N-methylmorpholine, N-ethylmorpholine, and other N-alkylmorpholines; and N-dimethylethanolamine, N-diethylethanolamine, and other N-dialkylalkanolamines. These compounds may be used alone or in combination of two or more.

Examples of the solvent include aromatic solvents such as benzene and toluene; alcohol solvents such as methanol and ethanol; ketone solvents such as acetone and methyl ethyl ketone; ester solvents such as ethyl acetate and butyl acetate; and polyhydric alcohol derivatives such as ethylene glycol monomethyl ether.

According to the above, the laminated film of the present invention is excellent in bag rupture resistance and bending resistance and has excellent gas barrier properties before and after bag producing processing or even when a bag produced from the laminated film is further used for packaging of hard contents such as packaging of dry matter or used for applications involving subjection to a harsh wet-heat treatment such as retort sterilization.

[Packaging Material]

In the case of using the laminated film of the present invention as a packaging material, it is preferred to form a heat-sealable resin layer called a sealant. The heat-sealable resin layer is usually provided on the inorganic thin film layer, but may be provided on the outer side of the base film layer (a surface of the base film layer that is opposite to the surface on which the coating layer is formed). The formation of the heat-sealable resin layer is usually attained by an extrusion laminating method or dry laminating method. A thermoplastic polymer for forming the heat-sealable resin layer may be any thermoplastic resin as far as the resin can sufficiently exhibit sealant adhesion. Examples thereof include polyethylene resins such as HDPE, LDPE, and LLDPE, polypropylene resin, ethylene-vinyl acetate copolymer, ethylene-$\alpha$-olefin random copolymer, and ionomer resin.

Furthermore, in the laminated film of the present invention, one or more printed layers, and one or more other plastic bases and/or paper bases may be laminated between the inorganic thin film layer or the base film layer and the heat-sealable resin layer, or onto the outer side of the heat-sealable resin layer.

A printing ink for forming the printed layer is preferably a water based or solvent based resin-containing printing ink. Examples of a resin used in the printing ink include acrylic resin, urethane resin, polyester resin, vinyl chloride resin, and vinyl acetate copolymer resin; and a mixture of these resins. The printing ink may contain known additives, such as antistatic agents, light blocking agents, ultraviolet absorbers, plasticizers, lubricants, fillers, colorants, stabilizers, lubricants, antifoaming agents, crosslinking agents, anti-blocking agents, and antioxidants. The printing method of forming the printed layer is not particularly limited, and a known method may be used, examples thereof including an offset printing method, a gravure printing method, and a screen printing method. For drying of a solvent after printing, a known drying method such as hot wind drying, hot roll drying, or infrared drying may be employed.

EXAMPLES

Next, the present invention will be described in more detail by way of examples. However, the present invention is not intended to be limited by the following examples. In the following examples, the evaluation of films was carried out by the following measurement methods.

[Thickness of Base Film Layer]

The measurement was conducted with a dial gauge in accordance with JIS K 7130-1999 Method A.

[Longitudinal Orientation Degree $\Delta$Nx of Base Film Layer]

Each of samples was measured with respect to a film length-direction refractive index (Nx) and a film width-direction refractive index (Ny) in accordance with JIS K 7142-1996 Method A using an Abbe's refractometer with sodium D line as a light source, and the degree of longitudinal orientation ΔNx was calculated by the equation (2).

$$\text{Longitudinal orientation degree } (\Delta Nx) = Nx - (Ny + Nz) / 2 \qquad (1)$$

[Thermal Shrinkage of Base Film Layer]

The thermal shrinkage of a polyester film was measured by the dimensional change test method in accordance with JIS-C-2151-2006.21 except that the test temperature was 150°C and the heating time was 15 minutes. Test pieces in accordance with the description of 21.1 (a) were used.

[Dimensional Change Rate of Base Film Layer at 200°C]

Using TMA (thermal mechanical analyzer) manufactured by Shimadzu Corporation, the temperature was raised from room temperature to 200°C to conduct the measurement. The heating rate was 10°C/minute, the width and the length of a measurement sample were 4 mm and 10 mm, respectively, and the initial tension was 100 mN.
The dimensional change rate (%) at 200°C of the obtained temperature change curve was read.

[Production of Laminate]

By a dry laminating method, an unstretched polypropylene film ("P1147", manufactured by Toyobo Co., Ltd.) as a heat-sealable resin layer, which had a thickness of 70 μm, was laminated on the protective layer side of each of the gas barrier films shown in Examples 1 to 9 and Comparative Examples 1 to 9 described later through a urethane based two-liquid-component curable adhesive (in which a product "TAKELAC (registered trademark) A525S" manufactured by Mitsui Chemicals, Inc. and a product "TAKENATE (registered trademark) A50" manufactured by the same were blended with each other at a ratio (by mass) of 13.5:1). The resultant was aged at 40°C for 4 days. Thus, laminates for evaluation were produced. Any adhesive layers made from the urethane based two-liquid-component curable adhesive had a thickness of about 4 μm after drying.

[Pinhole Resistance of Laminate]

Each laminate produced as above was cut into a piece having a size of 20.3 cm (8 inches) × 27.9 cm (11 inches) to prepare a rectangular test film. The rectangular test film thus prepared was allowed to leave under the conditions of a temperature of 23°C and a relative humidity of 50% for 24 hours or longer to condition the test film. Thereafter, the rectangular test film was wound into a cylindrical shape having a length of 20.32 cm (8 inches). One end of the cylindrical film was fixed to the outer periphery of a disc-like fixing head of a Gelbo flex tester (Model No. 901, manufactured by Rigaku Kogyo Co., Ltd.) (in accordance with the standard of MIL-B-131C), and the other end of the cylindrical film was fixed to the outer periphery of a disc-like movable head, which faced the fixing head 17.8 cm (7 inches) apart, of the tester.
Then, a bending test was repeated continuously 2000 cycles at a speed of 40 cycles per minute, in which one cycle of the bending test was as follows: the movable head was rotated by 440° while approaching the movable head by 7.6 cm (3.5 inches) toward the fixing head along an axis between both of the heads which faced each other in parallel, then the movable head was allowed to travel in a straight line by 6.4 cm (2.5 inches) without rotating the movable head, and then these operations were also performed in opposite directions so as to return the movable head to its original position. The test was carried out at 5°C.
Thereafter, the number of pinholes formed in an area having a size of 17.8 cm (7 inches) × 27.9 cm (11 inches) in the tested film, excluding an area at which the film was fixed to the outer periphery of the fixing head and an area at which the film was fixed to the outer periphery of the movable head, was counted (in other words, the number of pinholes per an area of 497 cm$^2$ (77 square inches) was counted).

[Laminate Strength of Laminate]

Each laminate produced as above was subjected to heat-moisture treatment for keeping the laminate in hot water of 130°C for 30 minutes, and was cut out in an undried state into a test piece of 15 mm width and 200 mm length. A Tensilon universal material machine ("TENSILON, UMT-II-500 model", manufactured by Toyo Baldwin Co., Ltd.) was used to measure the laminate strength thereof (after retort treatment) at a temperature of 23°C and a relative humidity of 65%. The laminate strength was defined as the strength of the test piece when the piece was subjected to peeling treatment at a peeling rate of 200 mm/minute and at a peeling angle of 90 degrees in the state that water was given to between the laminated film and the heat-sealable resin layer.

[Bag Rupture Resistance of Laminate]

Each laminate produced as above was cut into 15 square-cm pieces. Two of the pieces were overlaid on each other in such a manner that the sealant surfaces faced inward, and three sides of the resultant product were heat-sealed at a sealing temperature of 160°C and a seal width of 1.0 cm to produce a three side-sealed bag having an inside dimension of 13 cm.

The three side-sealed bag was filled with 250 mL of water, and then an opening on the fourth side of the bag was closed by means of heat sealing to produce a four side-sealed bag having water filled therein.

The four side-sealed bag thus produced was dropped from the height of 100 cm against a concrete plate in an environment having a chamber temperature of 5°C and a humidity of 35% RH, and the number of times of dropping of the bag until the breakage of the bag or the formation of pinholes occurred was counted.

[Oxygen Permeability of Laminate]

As for each laminate produced as above, in accordance with an electrolytic sensor method prescribed in JIS-K7126-2 (Appendix A), an oxygen permeability measuring instrument ("OX-TRAN 2/20", manufactured by MOCON Inc.) was used to measure an oxygen permeability in normal state in an atmosphere of a temperature of 23°C and a relative humidity of 65%. The measurement of the oxygen permeability was made in a direction in which oxygen permeated the laminate from the base film layer side to the sealant side.

[Oxygen Permeability after Bending of Laminate]

Each laminate produced as above was made into a sample piece of 112 inches × 8 inches size. The sample piece was formed into a cylindrical shape having a diameter of 3(1/2) inches, fitted to a Gelbo Flex Tester (MIL-B131H, manufactured by Rigaku Kogyo Co., Ltd.), and held at the both ends. The sample piece was twisted by an angle of 400 degrees at an initial gripping interval of 7 inches and a stroke of 3(1/2) inches. The reciprocation movement of this operation was repeated 50 times at a speed of 50 times/minute under conditions of 23°C and a relative humidity of 65%. As for the resultant laminate after the bending test, the oxygen permeability was measured in the same manner as that described above.

[Oxygen Permeability after Retorting Treatment of Laminate]

Each laminate produced as above was subjected to heat-moisture treatment for keeping the laminate in hot water of 130°C for 30 minutes, and then dried at 40°C for 1 day (24 hours). For the resultant laminate after the heat-moisture treatment, the oxygen permeability was measured in the same manner as that described above.

[Water Vapor Permeability of Laminate]

As for each laminate produced as above, in accordance with JIS-K7129-1992 Method B, a water vapor permeability measurement device ("PERMATRAN-W1A" manufactured by MOCON Inc.) was used to measure a water vapor permeability in normal state in an atmosphere of a temperature of 40°C and a relative humidity of 90%. The measurement of water vapor permeability was made in a direction in which water vapor permeated the laminate from the base film layer side to the sealant side.

[Water Vapor Permeability after Bending of Laminate]

Each laminate produced as above was made into a sample piece of 112 inches × 8 inches size. The sample piece was formed into a cylindrical shape having a diameter of 3(1/2) inches, fitted to a Gelbo Flex Tester (MIL-B131H, manufactured by Rigaku Kogyo Co., Ltd.), and held at the both ends. The sample piece was twisted by an angle of 400 degrees at an initial gripping interval of 7 inches and a stroke of 3(1/2) inches. The reciprocation movement of this operation was repeated 50 times at a speed of 50 times/minute under conditions of 23°C and a relative humidity of 65%. As for the resultant laminate after the bending test, the water vapor permeability (after the bending treatment) was measured in the same manner as that described above.

[Water Vapor Permeability after Retorting Treatment of Laminate]

Each laminate produced as above was subjected to heat-moisture treatment for keeping the laminate in hot water of 130°C for 30 minutes, and then dried at 40°C for 1 day (24 hours). For the resultant laminate after the heat-moisture treatment, the water vapor permeability was measured in the same manner as that described above.

The details of the raw material resins and the coating liquids used in Examples and Comparative Examples will be described below. Those were used in Examples 1 to 9 and Comparative Examples 1 to 9 as shown in Tables 1 and 2.

1) Polybutylene terephthalate (PBT) resin

In production of base film layers A-1 to A-11 described later, 1100-211XG (CHANG CHUN PLASTICS CO. LTD., intrinsic viscosity: 1.28 dl/g) was used as a polybutylene terephthalate resin.

2) Polyethylene terephthalate (PET) resin

In production of base film layers A-1 to A-13 described later, terephthalic acid//ethylene glycol = 100//100 (mol%) (Toyobo Co., Ltd., intrinsic viscosity: 0.62 dl/g) was used as a polyethylene terephthalate resin.

2) Polyethylene terephthalate (PET) resin

Terephthalic acid//ethylene glycol = 100//100 (mol%) (intrinsic viscosity 0.62 dl/g)

3) Resin having an oxazoline group (B)

As a resin having an oxazoline group, a commercially available watersoluble oxazoline group-containing acrylate ("Epocross (registered trademark) WS-300" manufactured by Nippon Shokubai Co., Ltd., solid content: 10%) was used. The amount of the oxazoline group in the resin was 7.7 mmol/g.

4) Acrylic resin (C)

As an acrylic resin, a commercially available 25% by mass emulsion of acrylic ester copolymer ("MOWINYL (registered trademark) 7980" manufactured by Nichigo-Movinyl Co. Ltd.) was used. This acrylic resin (B) had an acid value (theoretical value) of 4 mgKOH/g.

5) Urethane resin (D)

As a urethane resin, a commercially available polyester urethane resin dispersion ("TAKELAC (registered trademark) W605", manufactured by Mitsui Chemicals, Inc.; solid content: 30%) was used. This urethane resin had an acid value of 25 mgKOH/g and a glass transition temperature (Tg) of 100°C, which was measured by DSC. The proportion of aromatic or araliphatic diisocyanate(s) in this urethane resin, which was measured by 1H-NMR, was 55 mol% of the whole of the polyisocyanate components.

6) Urethane resin (E)

As a urethane resin, a commercially available m-xylylene-group-containing urethane resin dispersion ("TAKELAC (registered trademark) WPB341", manufactured by Mitsui Chemicals, Inc.; solid content: 30%) was used. This urethane resin had an acid value of 25 mgKOH/g and a glass transition temperature (Tg) of 130°C, which was measured by DSC. The proportion of aromatic or araliphatic diisocyanate(s) in this urethan resin, which was measured by 1H-NMR, was 85 mol% of the whole of the polyisocyanate components.

7) Coating liquid 1 used for coating layer

The following materials were mixed in the following blend ratio to produce a coating liquid (resin composition for a coating layer).

| | |
|---|---|
| Water: | 54.40% by mass, |
| Isopropanol: | 25.00% by mass, |

(continued)

| | |
|---|---|
| Oxazoline group-containing resin (A): | 15.00% by mass, |
| Acrylic resin (B): | 3.60% by mass, and |
| Urethane resin (C): | 2.00% by mass. |

8) Coating liquid 2 used for protective layer

The following coating materials were mixed to produce a coating liquid 2. The mass ratios in terms of solid content of the urethane resin (E) are as shown in Table 1.

| | |
|---|---|
| Water: | 60.00% by mass, |
| Isopropanol: | 30.00% by mass, and |
| Urethane resin (E): | 10.00% by mass. |

The production methods of the base film layers used in the respective Examples and Comparative Examples are described below. The physical properties of the following base film layers A-1 to A-13 and base film layer B are shown in Tables 1 and 2.

<Base Film Layer A-1>

Using a uniaxial extruder, 70% by mass of a polybutylene terephthalate resin and 30% by mass of a polyethylene terephthalate resin were mixed, silica particles having an average particle diameter of 2.4 $\mu$m, which served as inert particles, were added to the resultant mixture such that a silica concentration was 1600 ppm with respect to the mixed resins, the resultant product was melted at 290°C, and then a melt line was introduced into a 12-element static mixer. In this manner, the division and lamination of the polybutylene terephthalate melt body were carried out to produce a multi-layer melt body in which layers were made from the same raw materials. The melt body was casted through a T-die at 265°C and allowed to adhere onto a cooling roll having a temperature of 15°C by an electrostatic adhesion method to produce an unstretched sheet.

Subsequently, the unstretched sheet was roll-stretched in the machine direction (MD) at a stretch ratio of 3.8 times at 60°C and then stretched in the traverse direction (TD) at a stretch ratio of 4.0 times through a tenter at 90°C. The sheet was subjected to a heat treatment under tension at 210°C for 3 seconds and then to an 1% relaxation treatment for 1 second, and the grasp sections at both ends of the sheet were cut and removed by 10% to obtain a mill roll of a polybutylene terephthalate film having a thickness of 15 $\mu$m. The film formation conditions, physical properties and evaluation results of the obtained film are shown in Table 1.

<Base Film Layer A-2>

Using a uniaxial extruder, 70% by mass of a polybutylene terephthalate resin and 30% by mass of a polyethylene terephthalate resin were mixed, silica particles having an average particle diameter of 2.4 $\mu$m, which served as inert particles, were added to the resultant mixture such that a silica concentration was 1600 ppm with respect to the mixed resins, the resultant product was melted at 290°C, and then a melt line was introduced into a 12-element static mixer. In this manner, the division and lamination of the polybutylene terephthalate melt body were carried out to produce a multi-layer melt body in which layers were made from the same raw materials. The melt body was casted through a T-die at 265°C and allowed to adhere onto a cooling roll having a temperature of 15°C by an electrostatic adhesion method to produce an unstretched sheet.

Subsequently, the unstretched sheet was roll-stretched in the machine direction (MD) at a stretch ratio of 3.8 times at 60°C and then stretched in the traverse direction (TD) at a stretch ratio of 4.0 times through a tenter at 90°C. The sheet was subjected to a heat treatment under tension at 210°C for 3 seconds and then to an 1% relaxation treatment for 1 second, and the grasp sections at both ends of the sheet were cut and removed by 10% to obtain a mill roll of a polybutylene terephthalate film having a thickness of 15 $\mu$m. The film formation conditions, physical properties and evaluation results of the obtained film are shown in Table 1.

In the biaxially-stretched film forming step of the base film layer A-1, the resin composition for a coating layer (coating liquid 1) was applied by a fountain bar coating method after MD stretching. Thereafter, the sheet was led to a tenter while being dried, and was dried at a pre-heating temperature of 70°C to volatilize the solvent. Next, the sheet was stretched in the transverse direction, and was subjected to a heat treatment and relaxation under the film formation conditions shown in Table 1, thereby obtaining a two-layer film (plastic base film layer/coating layer) in which a coating layer was formed on one surface of a biaxially-stretched polyester film (plastic base film layer) having a thickness of 15 μm.

<Base Film Layer A-3>

The same procedure as in the base film layer A-2 was carried out except that the relaxation rate in the transverse stretching direction (TD) was changed to 2% in the biaxially-stretched film forming step of the base film layer A-2.

<Base Film Layer A-4>

The same procedure as in the base film layer A-2 was carried out except that the temperature of the heat treatment after transverse stretching was changed to 205°C in the biaxially-stretched film forming step of the base film layer A-2.

<Base Film Layer A-5>

The same procedure as in the base film layer A-2 was carried out except that the stretch ratio in the machine direction was changed to 3.3 times in the biaxially-stretched film forming step of the base film layer A-2.

<Base Film Layer A-6>

The same procedure as in the base film layer A-2 was carried out except that the raw materials of the base film layer A-2 were changed as follows: to 100% by mass of a polybutylene terephthalate resin was added silica particles having an average particle diameter of 2.4 μm, which served as inert particles, such that a silica concentration was 1600 ppm with respect to the resin.

<Base Film Layer A-7>

The same procedure as in the base film layer A-2 was carried out except that the raw materials of the base film layer A-2 were changed as follows: to the mixture of 60% by mass of a polybutylene terephthalate resin and 30% by mass of a polyethylene terephthalate resin was added silica particles having an average particle diameter of 2.4 μm, which served as inert particles, such that a silica concentration was 1600 ppm with respect to the mixture of resins.

<Base Film Layer A-8>

The same procedure as in the base film layer A-2 was carried out except that the stretch ratio in the machine direction was changed to 2.5 times in the biaxially-stretched film forming step of the base film layer A-1.

<Base Film Layer A-9>

The same procedure as in the base film layer A-2 was carried out except that the stretch ratio in the machine direction was changed to 2.5 times in the biaxially-stretched film forming step of the base film layer A-2.

<Base Film Layer A-10>

The same procedure as in the base film layer A-2 was carried out except that the temperature of the heat treatment after transverse stretching was changed to 190°C in the biaxially-stretched film forming step of the base film layer A-2.

<Base Film Layer A-11>

The same procedure as in the base film layer A-2 was carried out except that the raw materials of the base film layer A-2 were changed as follows: to the mixture of 50% by mass of a polybutylene terephthalate resin and 50% by mass of a polyethylene terephthalate resin was added silica particles having an average particle diameter of 2.4 μm, which served as inert particles, such that a silica concentration was 1600 ppm with respect to the mixture of resins.

<Base Film Layer A-12>

A polyethylene terephthalate resin having an intrinsic viscosity of 0.62 dl/g (30°C, phenol/tetrachloroethane = 60/40) was subjected to preliminary crystallization, then subjected to main drying, extruded at 280°C using an extruder having a T-die, and rapidly cooled and solidified on a drum having a surface temperature of 40°C to obtain an amorphous sheet. Next, the obtained sheet was subjected to stretching of 4.0 times at 100°C in the machine direction between a heating roll and a cooling roll. Then, the uniaxially stretched film was introduced to a tenter, preheated at 100°C, subjected to stretching of 4.0 times in the transverse direction at 120°C, and subjected to a heating treatment at 225°C while carrying out 6% relaxation in the transverse direction to obtain a biaxially stretched polyester film having a thickness of 12 $\mu$m.

<Base Film Layer A-13>

Production of polyester base film layer and coating of coating liquid 1 (lamination of coating layer):

A polyethylene terephthalate resin having an intrinsic viscosity of 0.62 dl/g (30°C, phenol/tetrachloroethane = 60/40) was subjected to preliminary crystallization, then subjected to main drying, extruded at 280°C using an extruder having a T-die, and rapidly cooled and solidified on a drum having a surface temperature of 40°C to obtain an amorphous sheet. Next, the obtained sheet was subjected to stretching of 4.0 times at 100°C in the longitudinal direction between a heating roll and a cooling roll. Then, the coating liquid 1 was applied to one surface of the resulting uniaxially stretched film by a fountain bar coating method. The uniaxially stretched film was introduced to a tenter while being dried, preheated at 100°C, subjected to stretching of 4.0 times in the transverse direction at 120°C, and subjected to a heating treatment at 225°C while carrying out 6% relaxation in the transverse direction to obtain a laminated film having a coating layer of 0.020 g/m$^2$ formed on the biaxially stretched polyester film having a thickness of 12 $\mu$m.

<Base Film Layer B>

A biaxially stretched nylon film ("N1102" manufactured by Toyobo Co., Ltd., thickness: 15$\mu$m) was laminated on one surface of the base film layer A-13, as a base film reinforcing layer, using a urethane-based two-component curable adhesive (obtained by blending "TAKELAC (registered trademark) A525S" and "TAKENATE (registered trademark) A50" manufactured by Mitsui Chemicals Inc. at a ratio of 13.5:1 (mass ratio)) by a dry lamination method. The resultant laminate was aged at 40°C for 4 days to obtain a PET/ONY laminate. The adhesive layer formed by the urethane-based two-component curable adhesive had a thickness after drying of about 4 $\mu$m.

The physical properties of the base film layers A-1 to A-13 and the base film layer B are shown in Tables 1 and 2.

Methods for forming the inorganic thin film layers used in Examples and Comparative Examples are described below.

<Formation of Inorganic Thin Film Layer M-1>

Aluminum oxide was vapor-deposited, as an inorganic thin film layer M-1, on each of the base film layers A-1, A-2, and A-8 to A-11. The method of vapor-depositing aluminum oxide on the base film layer includes a process in which a film is set to the unwinding side of a continuous-type vacuum vapor deposition apparatus, allowed to travel via a cooling metal drum, and wound up. At this time, pressure in the continuous-type vacuum vapor deposition apparatus was reduced to 10-4 Torr or less, an alumina crucible beneath the cooling drum was loaded with a metal aluminum having a purity of 99.99%, and the metal aluminum was heated to generate a vapor. While oxygen was supplied into the vapor to conduct an oxidization reaction, aluminum oxide was deposited onto the film to form an aluminum oxide film having a thickness of 30 nm.

<Formation of Inorganic Thin Film Layer M-2>

A composite oxide layer composed of silicon dioxide and aluminum oxide was formed, as an inorganic thin film layer M-2, on each of the base film layers A-1 to A-7, A-12 and A-13, and the base film layer B by an electron beam vapor deposition method. As a vapor deposition source, $SiO_2$ (purity: 99.9%) and $Al_2O_3$ (purity: 99.9%) in the form of particles having a size of about 3 to 5 mm were used. In the film (inorganic thin film layer/coating layer-containing film) thus obtained, the film thickness of the inorganic thin film layer ($SiO_2$/$Al_2O_3$ composite oxide layer) was 13 nm. The composition of this composite oxide layer was as follows: $SiO_2$/$Al_2O_3$ (mass ratio) = 60/40.

<Formation of Coating Liquid 2 onto Vapor Deposition Film>

The coating liquid 2 was applied onto the inorganic thin film layer formed by vapor deposition as described above by a wire bar coating method and dried at 200°C for 15 seconds to obtain a protective layer. The coating amount after drying was 0.190 g/m$^2$ (Dry solids content).

In this manner, a laminated film in which the coating layer/the metal oxide layer/the protective layer were formed on the base film layer was produced.

16 types of laminated films were obtained in total. The laminated films using the base film layer A-1, A-2 or A-8 included each two types that differ only in the inorganic thin film layer, and the laminated films using the base film layers A-1, A-2 or A-8 and having no protective layer were also prepared. The evaluation results of those laminated films are shown in Tables 1 and 2.

[Table 1]

| Item | | Unit | Example | | | | | | | | |
|---|---|---|---|---|---|---|---|---|---|---|---|
| | | | 1 | 2 | 3 | 4 | 5 | 6 | 7 | 8 | 9 |
| PBT | | % by mass | 70 | 70 | 70 | 70 | 70 | 70 | 70 | 100 | 60 |
| PET | | % by mass | 30 | 30 | 30 | 30 | 30 | 30 | 30 | 0 | 40 |
| Stretch ratio | MD | times | 3.8 | 3.8 | 3.8 | 3.8 | 3.8 | 3.8 | 3.3 | 3.8 | 3.8 |
| | TD | times | 4 | 4 | 4 | 4 | 4 | 4 | 4 | 4 | 4 |
| Thermal fixing temperature | | °C | 210 | 210 | 210 | 210 | 210 | 205 | 210 | 210 | 210 |
| TD relaxation ratio | | % | 5 | 5 | 5 | 5 | 2 | 5 | 5 | 5 | 5 |
| Longitudinal orientation degree | Δ Nx | - | 0.065 | 0.065 | 0.065 | 0.065 | 0.063 | 0.07 | 0.05 | 0.068 | 0.068 |
| Thickness | | μm | 15 | 15 | 15 | 15 | 15 | 15 | 15 | 15 | 15 |
| Thermal shrinkage | MD | % | 1.5 | 1.5 | 1.5 | 1.5 | 1.5 | 3.5 | 1 | 1.8 | 1.8 |
| | TD | % | 0.5 | 0.5 | 0.5 | 0.5 | 3.2 | 0.5 | 0.5 | 0.5 | 0.5 |
| Dimensional change rate in temperature change curve | | % | -2.7 | -2.7 | -2.7 | -2.7 | -2.3 | -3.8 | 0.4 | -3.4 | -3.4 |
| Base film layer | | - | A-1 | A-1 | A-2 | A-2 | A-3 | A-4 | A-5 | A-6 | A-7 |
| Coating layer | | - | - | - | Presence | Presence | Presence | Presence | Presence | Presence | Presence |
| Inorganic thin film layer | | - | M-1 | M-2 | M-1 | M-2 | M-2 | M-2 | M-2 | M-2 | M-2 |
| Protective layer | | - | Presence | Presence | Presence | Presence | Presence | Presence | Presence | Presence | Presence |
| Bag rupture resistance | | times | 50 | 51 | 50 | 51 | 49 | 48 | 50 | 65 | 35 |
| Pinhole resistance | | number | 5 | 4 | 4 | 5 | 3 | 3 | 4 | 2 | 9 |
| Laminate strength | Normal state | N/15mm | 2.8 | 2.9 | 4.9 | 5.0 | 4.9 | 4.8 | 5.2 | 4.6 | 5.8 |
| | After retorting | N/15mm | 0.1 | 0.1 | 4.8 | 5.0 | 4.1 | 5.0 | 5.0 | 4.5 | 5.7 |

EP 3 590 706 A1

(continued)

| Item | | Unit | Example | | | | | | | | |
|---|---|---|---|---|---|---|---|---|---|---|---|
| | | | 1 | 2 | 3 | 4 | 5 | 6 | 7 | 8 | 9 |
| Barrier property | Normal state | OTR | ml/m²·day·MPa | 2.5 | 2.6 | 2.0 | 2.1 | 2.3 | 2.1 | 2.2 | 2.1 | 2.0 |
| | | WVTR | g/m²·day | 0.34 | 0.35 | 0.4 | 0.44 | 0.5 | 0.4 | 0.5 | 0.4 | 0.4 |
| | After bending | OTR | ml/m²·day·MPa | 25.7 | 23.4 | 36.1 | 32.8 | 36.1 | 33.5 | 34.4 | 33.5 | 30.8 |
| | | WVTR | g/m²·day | 0.70 | 0.58 | 0.6 | 0.48 | 0.5 | 0.5 | 0.5 | 0.5 | 0.5 |
| | After retorting | OTR | ml/m²·day·MPa | 43.8 | 44.5 | 2.8 | 2.9 | 5.2 | 5.4 | 3.0 | 3.0 | 2.7 |
| | | WVTR | g/m²·day | 4.1 | 4.3 | 0.4 | 0.39 | 0.9 | 0.9 | 0.4 | 0.4 | 0.4 |

[Table 2]

| Item | | Unit | Comparative Example | | | | | | | | |
|---|---|---|---|---|---|---|---|---|---|---|---|
| | | | 1 | 2 | 3 | 4 | 5 | 6 | 7 | 8 | 9 |
| PBT | | % by mass | 70 | 70 | 70 | 50 | 70 | 70 | 0 | 0 | |
| PET | | % by mass | 30 | 30 | 30 | 50 | 30 | 30 | 100 | 100 | |
| Stretch ratio | MD | times | 2.5 | 2.5 | 3.8 | 3.8 | 3.8 | 3.8 | 4 | 4 | |
| | TD | times | 4 | 4 | 4 | 4 | 4 | 4 | 4 | 4 | |
| Thermal fixing temperature | | °C | 210 | 210 | 190 | 210 | 210 | 210 | 225 | 225 | |
| TD relaxation ratio | | % | 5 | 5 | 5 | 5 | 5 | 5 | 6 | 6 | |
| Longitudinal orientation degree | $\triangle$ Nx | - | 0.036 | 0.036 | 0.072 | 0.068 | 0.065 | 0.065 | - | - | |
| Thickness | | $\mu$ m | 15 | 15 | 15 | 15 | 15 | 15 | 12 | 12 | 12/15 |
| Thermal shrinkage | MD | % | 1.5 | 1.5 | 4.5 | 1.4 | 1.5 | 1.5 | - | - | - |
| | TD | % | 0.5 | 0.5 | 1.2 | 0.4 | 0.5 | 0.5 | - | - | - |
| Dimensional change rate in temperature change curve | | % | 3.4 | 3.4 | -4.1 | -3.4 | -2.73 | -2.73 | - | - | - |
| Base film layer | | - | A-8 | A-8 | A-10 | A-11 | A-1 | A-2 | A-12 | A-13 | B: PET/ONY |
| Coating layer | | - | - | - | Presence | Presence | - | Presence | - | Presence | Presence |
| Inorganic thin film layer | | - | M-1 | M-1 | M-1 | M-1 | M-2 | M-2 | M-2 | M-2 | M-2 |
| Protective layer | | - | Presence | - | Presence | Presence | - | - | Presence | Presence | Presence |
| Bag rupture resistance | | times | 45 | 45 | 39 | 23 | 50 | 50 | 4 | 4 | 38 |
| Pinhole resistance | | number | 5 | 5 | 4 | 12 | 5 | 5 | 21 | 21 | 5 |
| Laminate strength | Normal state | N/15mm | 2.8 | 2.1 | 4.0 | 5.4 | 6.7 | 9 | 3 | 3 | 7 |
| | After retorting | N/15mm | 0.1 | 0.1 | 4.0 | 5.1 | 0.2 | 4.8 | 0.1 | 2.7 | 5.1 |

(continued)

| Item | | | Unit | Comparative Example | | | | | | | | |
|---|---|---|---|---|---|---|---|---|---|---|---|---|
| | | | | 1 | 2 | 3 | 4 | 5 | 6 | 7 | 8 | 9 |
| Barrier property | Normal state | OTR | ml/m$^2$·day·MPa | 6.3 | 4.9 | 2.4 | 2.1 | 2.9 | 2.7 | 2.8 | 2.4 | 2.2 |
| | | WVTR | g/m$^2$·day | 0.41 | 1.20 | 0.5 | 0.43 | 0.9 | 0.6 | 0.3 | 0.5 | 0.5 |
| | After bending | OTR | ml/m$^2$·day·MPa | 69 | 74 | 31.4 | 33.3 | 26.1 | 20.9 | 85 | 35 | 31.5 |
| | | WVTR | g/m$^2$·day | 0.53 | 2.10 | 0.5 | 0.57 | 1.0 | 0.7 | 0.36 | 0.6 | 0.5 |
| | After retorting | OTR | ml/m$^2$·day·MPa | 110 | 181 | 79.2 | 2.8 | 199 | 6.7 | 24 | 2.4 | 2.2 |
| | | WVTR | g/m$^2$·day | 4.9 | 10.1 | 3.5 | 0.38 | 4.4 | 0.9 | 2.7 | 0.7 | 0.6 |

As shown in Table 1, it is apparent from Examples 1 and 2 that the gas barrier films obtained according to the present invention had high gas barrier properties in normal state even after off-line coating (OC) processing, and had also high gas barrier properties even after bending as compared with those of Comparative Examples 1 and 2. Therefore, the gas barrier films obtained according to the present invention are suitable for packaging of hard contents such as packaging of dry matter.

Furthermore, it is apparent from Examples 3 to 9 that, due to the presence of the coating layer between the base film layer and the inorganic thin film layer, the gas barrier films obtained according to the present invention were able to keep high gas barrier properties even after being subjected to a harsh wet-heat treatment such as retort sterilization. Furthermore, these gas barrier films were excellent in bag rupture resistance and bending and pinhole resistance, and therefore can be suitably used as retort packaging materials.

The film of Comparative Example 1 had a large temperature-dimensional change in the longitudinal direction since the stretch ratio in the MD direction was low and the longitudinal orientation was small, and thus was inferior in barrier property even though the protective layer was formed. In addition, this film had no easy adhesive layer and was thus inferior in laminate strength.

The film of Comparative Example 2, in which no protective layer was formed in the film described in Comparative Example 1, did not show the decrease in barrier property associated with the formation of a protective layer, but was inferior in barrier property after the retort treatment. In addition, this film had no adhesive layer and was thus inferior in laminate strength.

The film of Comparative Example 3 had a high thermal shrinkage, and thus was inferior in barrier property after retort treatment.

The film of Comparative Example 4 had a small content of PBT, and thus was inferior in bending resistance and bag rupture resistance.

The film of Comparative Example 5 had no easy adhesive layer and no protective layer, and thus was significantly inferior in oxygen barrier property after retort treatment.

The film of Comparative Example 6 having no protective layer had an improved barrier property as compared with that of Comparative Example 5, but did not attain satisfactory performance.

The films of Comparative Examples 7 and 8 did not contain PBT, and thus were inferior in bending resistance and bag rupture resistance.

The PET/NY laminated film of Comparative Example 9 was inferior in bending resistance due to the presence of a large proportion of the PET layer.

INDUSTRIAL APPLICABILITY

According to the present invention, it is possible to provide a gas barrier film that has an inorganic thin film layer, and a laminated body using the same, the gas barrier film being excellent in gas barrier properties, dimensional stability, processibility, bag rupture resistance, and bending resistance as well as having excellent gas barrier properties even when used for applications susceptible to damage by hard contents, such as packaging of dry matter, and even when used for applications involving subjection to a harsh wet-heat treatment such as retort sterilization. The gas barrier film can be used widely as food packaging materials, and therefore can be expected to greatly contribute to industrial fields.

The present invention allows to provide a gas barrier film which is excellent in gas barrier properties and simultaneously excellent in bag rupture resistance and bending resistance in normal state, and also even after being subjected to wet-heat treatment, and a laminated body using the same. This gas barrier film has advantages of being easily produced, being excellent in economy and production stability, and gaining even properties easily. Accordingly, this gas barrier film is widely usable not only for food packaging, but also for packaging of medicines, industrial products and other products, and for industrial articles such as solar batteries, electronic paper, organic EL devices, semiconductor devices, and others.

**Claims**

1. A laminated film comprising an inorganic thin film layer and a protective layer in this order on a base film layer, wherein the base film layer satisfies the following conditions (a) to (c):

    (a) the base film layer comprises a resin composition containing 60% by mass or more of a polybutylene terephthalate resin;
    (b) a thermal shrinkage at 150°C is 4.0% or less both in a longitudinal direction and a width direction of the base film layer; and
    (c) a dimensional change rate at 200°C with respect to an original length of the film is 2% or less in a temperature-dimensional change curve in a longitudinal direction of the base film layer.

2. The laminated film according to claim 1, wherein the protective layer comprises a resin composition containing a urethane resin.

3. The laminated film according to claim 2, wherein the urethane resin contains an aromatic or araliphatic component.

4. The laminated film according to any of claims 1 to 3, wherein the inorganic thin film layer comprises a composite oxide of silicon oxide and aluminum oxide.

5. The laminated film according to any of claims 1 to 4, further comprising a coating layer between the base film layer and the inorganic thin film layer.

6. The laminated film according to claim 5, wherein the coating layer comprises a resin composition containing a resin having an oxazoline group.

7. A packaging material comprising a sealant layer on one surface of the laminated film according to claims 1 to 6.

## INTERNATIONAL SEARCH REPORT

| International application No. |
| --- |
| PCT/JP2018/001899 |

A. CLASSIFICATION OF SUBJECT MATTER
Int.Cl.    B32B9/00(2006.01)i,    B32B27/36(2006.01)i,    B32B27/40(2006.01)i,
           B65D65/40(2006.01)i

According to International Patent Classification (IPC) or to both national classification and IPC

B. FIELDS SEARCHED

Minimum documentation searched (classification system followed by classification symbols)
Int.Cl. B32B9/00, B32B27/36, B32B27/40, B65D65/40

| Documentation searched other than minimum documentation to the extent that such documents are included in the fields searched | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | WO 2015/178390 A1 (TOYOBO CO., LTD.) 26 November 2015, claims 1, 3, paragraphs [0001], [0014], [0020]–[0037], [0045], [0052], [0053], [0055], [0057], [0071]–[0073], [0079] & US 2017/0088682 A1, claims 1-3, paragraphs [0001], [0029]–[0049], [0062], [0071]–[0074] & EP 3147313 A1 & CN 106459441 A & KR 10-2017-0013281 A | 1–7 |

☒ Further documents are listed in the continuation of Box C.      ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 26 March 2018 (26.03.2018) | 03 April 2018 (03.04.2018) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

24

**INTERNATIONAL SEARCH REPORT**

International application No.

PCT/JP2018/001899

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2016/136768 A1 (TOYOBO CO., LTD.) 01 September 2016, claim 1, paragraphs [0001], [0025], [0057], [0058] & CN 107249887 A | 1-7 |
| Y | JP 2006-82319 A (DAINIPPON PRINTING CO., LTD.) 30 March 2006, claim 1, paragraphs [0007], [0019] (Family: none) | 1-7 |
| Y | JP 2007-152932 A (TEIJIN DUPONT FILM JAPAN LTD.) 21 June 2007, claims 1, 7, paragraph [0050] & KR 10-2007-0004448 A | 1-7 |
| A | JP 2014-15233 A (KOHJIN HOLDINGS CO., LTD.) 30 January 2014, claims 1, 2 (Family: none) | 1-7 |
| A | JP 2015-150836 A (TOPPAN PRINTING CO., LTD.) 24 August 2015, claims 1, 3 (Family: none) | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06278240 A
- JP H1110725 A
- JP 2013154605 A
- JP 2012214248 A